# EUROPEAN PATENT APPLICATION

(11) **EP 4 117 061 A1**
(43) Date of publication of application: **11.01.2023**
(21) Application number: 21184880.9
(22) Date of filing: 09.07.2021
(51) Int. Cl.: H01M 8/04014, H01M 8/04089, H01M 8/04119, H01M 8/0444, H01M 8/04746, H01M 8/04791, H01M 8/0637, H01M 8/0668

(54) **METHOD OF OPERATING A FUEL CELL SYSTEM IN FUEL CELL MODE**

(71) Applicant: Technische Universität München, 80333 München (DE)
(72) Inventor: HERRMANN, Stephan, 81925 München (DE); FISCHER, Felix, 80336 München (DE); SPLIETHOFF, Hartmut, 82140 Olching (DE); HAUCK, Maximilian, 81369 München (DE); WEINRICH, Jeremias, 94315 Straubing (DE)
(74) Representative: Hoefer & Partner Patentanwälte mbB

(57) **Abstract**

The invention concerns a method of operating a fuel cell system (1) in fuel cell mode, the fuel cell system (1) comprising at least one fuel cell (2) comprising an anode (2a), a cathode (2b) and an electrolyte (2c) provided between the anode (2a) and the cathode (2b), the fuel cell (2) being arranged for an internal reformation of hydrocarbon compounds inside the anode (2a), an anode exhaust conduit (4) connecting the anode outlet (2d) and a fuel conduit (6) and comprising a methanation unit (3a), a water-gas shift reactor (3b), and a water vapor condenser or water removal unit (12), the anode exhaust conduit (4) or the fuel conduit (6) comprising a carbon dioxide separation unit (11), and the fuel conduit (6) connecting a fuel cell system inlet (7) and an anode inlet (2e), the method comprising the steps of a) feeding feed gas into the fuel conduit (6) via the fuel cell system inlet (7), the feed gas comprising hydrocarbon compounds, b) controlling the methanation unit (3a) to produce methane and controlling the water gas shift reactor (3b) to produce hydrogen so that in a feed gas mixture supplied to the anode inlet (2e) a molar ratio of hydrogen to carbon at a selected operation temperature of the fuel cell (2) prevents the formation of solid carbon, wherein the molar ratio of oxygen to carbon in the feed gas mixture supplied to the anode inlet is smaller than 1, preferably smaller than 0.1, c) wherein carbon dioxide is separated from an anode exhaust or the feed gas mixture in the carbon dioxide separation unit (11), wherein water is not added to the feed gas or the feed gas mixture supplied to the anode inlet (2e), and wherein water vapor contained in the anode exhaust is separated in a water vapor condenser or water removal unit (12).

## Description

The present invention relates to a method for operating a reversible or non-reversible fuel cell system in fuel cell mode with increased total efficiency.

Fuel cell systems using hydrocarbon compound-based fuel, often primarily consisting of methane, such as natural gas or biogas, but sometimes also other hydrocarbons like propane or the like, are widely used in the prior art. In order to prevent side reactions of solid carbon formation (carbon deposition/corrosion), in the prior art the fuel supplied to the fuel cell is diluted with either air, water vapor or carbon dioxide in order to perform a reforming reaction of the hydrocarbon fuel, wherein the addition of air or carbon dioxide promotes a dry reformation and water vapor a steam reforming. However, the addition of air leads to a partial oxidation of the fuel prior to entering the fuel cell. This greatly reduces the total efficiency degree of the fuel cell system due to loss of fuel. The addition of either carbon dioxide or water also reduces the performance of the fuel cell and the efficiency of the fuel cell system as carbon dioxide and water are the products of the fuel cell reaction so that the reaction equilibrium of the fuel cell reaction is shifted to the educt side, thereby lowering the fuel cell efficiency.

Furthermore, fuel cell systems operating on hydrocarbon fuels known in the prior art have a fuel utilization of about 70 to 80 % only, these fuel cell systems showing a low total efficiency and generate up to 35-60 % low temperature waste heat and heat losses. Due to the heat produced at the anode side of the fuel cell, efficient cooling needs to be carried out, which consumes a lot of energy even when done as in the state of the art by using the air supplied to the cathode for this purpose.

It is therefore an object underlying the present invention to provide a method of operating a (reversible) fuel cell system in fuel cell mode with increased fuel utilization and an increased total efficiency, wherein the utilization rate of heat and fuel is maximized.

The object is achieved by the independent claim. The sub-claims contain advantageous embodiments of the present invention.

The fuel cell system, which may be a reversible fuel cell system, to which the method of operating a fuel cell system in fuel cell mode according to the present invention is applied to, comprises at least one fuel cell comprising an anode, a cathode and an electrolyte, which is provided between the anode and cathode. The fuel cell is further arranged for an internal reformation of hydrocarbon compounds inside the fuel cell, and preferably in the anode. "Internal" in this sense means "within the fuel cell". In other words, a reformation section forms part of the fuel cell and is thus, provided within the fuel cell, and is particularly located near the electrochemical reaction zone of the fuel cell and therefore in direct thermal contact with the fuel cell reaction zone.

An anode exhaust conduit is provided, which connects an anode outlet and a fuel conduit. The anode exhaust conduit comprises a methanation unit for producing methane out of anode exhaust, a water-gas shift reactor for producing hydrogen and carbon dioxide out of carbon monoxide and water contained in the anode exhaust, and a water vapor condenser or water removal unit for reducing the water content in the anode exhaust.

The anode exhaust conduit or the fuel conduit comprises a carbon dioxide separation unit for separating carbon dioxide from the anode exhaust or a feed gas mixture supplied via the fuel conduit to the anode inlet of the anode of the fuel cell.

In some preferred embodiments, the system further comprises means to control a share of anode exhaust directed to the methanation unit and another share not passing through the methanation unit, which is mixed with the methanated gas flow downstream of the methanation unit. Appropriate control means might for example be control valves.

The fuel conduit connects a fuel cell system inlet and an anode inlet. In the fuel conduit feed gas supplied via the fuel cell system inlet and recycled and/or treated anode exhaust are mixed prior to entering the anode inlet, thereby obtaining a feed gas mixture to be supplied to the anode inlet.

For the sake of completeness, it is outlined that the cathode comprises a cathode inlet and a cathode outlet. Oxidant gas, like e.g. pure oxygen or air can be supplied to the cathode inlet via an oxidant conduit. The oxidant conduit may comprise a compressor as well as a heat exchanger. The heat exchanger may use heat from the cathode exhaust supplied via a cathode exhaust conduit to pre-heat the oxidant in the oxidant conduit, so that thermal energy at the cathode side of the fuel cell is effectively used.

The method comprises the following steps:
In step a), feed gas is fed into the fuel conduit via the fuel cell system inlet, wherein the feed gas comprises hydrocarbon compounds. Among the preferable hydrocarbon compounds, the following are listed: methane, natural gas, gasified liquid gas, propane gas, biogas, domestic gas, as well as gasified diesel, benzene and natural gasoline. According to a preferable embodiment, the feed gas may comprise at least 95 Vol% methane and may comprise carbon dioxide, nitrogen and inert gases in a total amount of less than 2 Vol%, and preferably less than 1 Vol%.

In step b) the methanation unit is controlled to produce methane and the water gas shift reactor is controlled to produce hydrogen so that in a feed gas mixture, which comprises the hydrocarbon feed gas fed via the fuel cell system inlet and recycled and/or treated anode exhaust provided to the fuel conduit via the anode exhaust conduit, supplied to the anode inlet via the fuel conduit, a molar ratio of hydrogen to carbon at a selected operation temperature of the fuel cell prevents the formation of solid carbon, wherein the molar ratio of oxygen to carbon in the feed gas mixture supplied to the anode inlet is much smaller than 1, and preferably less than 0.1.

In a step c) carbon dioxide is separated from the anode exhaust or the feed gas mixture in the carbon dioxide separation unit. This means in other words that the carbon dioxide may be removed or reduced before the recycled and/or treated anode exhaust is supplied to the fuel conduit and mixed therein with hydrocarbon compounds from the feed gas and the resulting feed gas mixture is fed to the fuel cell. Alternatively, the carbon dioxide may be reduced or removed from the fuel gas mixture to be supplied to the fuel cell after the recycled and/or treated anode exhaust is supplied to the fuel conduit and mixed therein with hydrocarbon compounds from the feed gas. In particular, step c) may be adapted in the case that the feed gas contains a share of carbon dioxide of higher than 5 Vol%, for example for biogas, and in this case the feed gas shall be mixed with the anode exhaust gas directly prior to the carbon dioxide separation.

Furthermore, preferably after step b) and before or after step c) the water vapor content of the anode exhaust gas is reduced using a water vapor condenser or a water removal unit by cooling the gas to a temperature below the dew point in order to condense a share of the water vapor. The cooling can be performed for example by direct or indirect heat exchange with a cooling water stream. It is especially preferable to reduce the water vapor content of the gas to below 10 Vol%, and more preferable to below 3 Vol%.

According to the inventive method, it is essential that no water is added to the feed gas or the feed gas mixture supplied to the anode inlet. Further preferable, no carbon dioxide is added to the fuel or gas mixture, except those amounts of carbon dioxide already contained in the anode exhaust and/or the hydrocarbon compounds.

The formation of solid carbon can be prevented more completely, when the total content of carbon dioxide contained in the feed gas mixture supplied to the anode inlet is less than 20 Vol%, preferably less than 10 Vol% and more preferably less than 3 Vol%, relative to the total volume of the feed gas mixture supplied to the anode inlet.

Applying the inventive method to the fuel cell system improves the fuel cell performance and increases the total efficiency degree of the fuel cell system by a high percentage of utilization of fuel supplied to the anode inlet.

According to a preferable embodiment, during regular operation (not start-up or shut down) except of water condensed and carbon dioxide rich gas removed during the carbon dioxide separation, no other gas is removed from the fuel conduits of the system.

More particular, the methane and hydrogen amount supplied to the fuel cell anode via the fuel conduit corresponds to the methane and hydrogen amount produced by the methanation reaction and the water-gas shift reaction plus the hydrocarbon feed gas mixed with the anode exhaust. Accordingly, no additional methane and/or hydrogen supply to the anode exhaust is carried out and, except for technically unavoidable losses potentially occurring during the carbon dioxide separation, no methane or hydrogen is removed from the anode exhaust. Further preferably, in an overall balance hydrogen is cycled through the fuel cell system, wherein the hydrogen is overall not consumed.

According to a preferable embodiment, the method further comprises a step of reforming hydrocarbon compounds contained in the feed gas mixture inside the anode. Since the reformation reaction is endothermal, heat produced by the fuel cell reaction (consumption of hydrocarbon fuel at the anode side) is absorbed and used to support the reformation reaction. In other words, heat produced in the fuel cell by the fuel cell reaction can be effectively consumed by carrying out the reformation reaction internally within the fuel cell. This makes cooling of the fuel cell by use of air supplied to the cathode less necessary, i.e. less electric power for driving a fan or the like has to be used to supply air to the cathode as the air is no longer mainly used for cooling the fuel cell. Therefore, electric power for the cooling of the fuel cell can be saved.

Further preferably, the system is controlled by means of e.g. adjusting the temperature of the methanation reactor and/or controlling a share of anode exhaust gas fed to the methanation unit, such that only 5 to 35% of the residual fuel molecules in the anode exhaust gas undergo a methanation reaction and the residual amount undergoes a shift reaction such that the carbon monoxide content of the gas after such treatment is less than 1%.

According to a further preferable embodiment, when the total amount of methane produced by methanation reaction in the methanation unit and hydrogen produced by water-gas shift reaction in the water-gas shift reactor is 100 Mol%, the water-gas shift reaction produces 65 to 95 Mol% hydrogen and the methanation reaction produces methane in an amount of 100 Mol% minus the amount of hydrogen produced in Mol%.

The above-described method for operating a fuel cell system further preferably comprises controlling the molar ratio of hydrogen to carbon atoms in the feed gas mixture fed to the anode of the fuel cell depending to the fuel cell operating temperature and pressure by adjusting reactor temperatures and/or the share of anode exhaust gas fed to the methanation unit, such that carbon deposition is thermodynamically prevented without the presence of water steam in the feed gas mixture, especially without adding water to the feed gas mixture supplied to the fuel cell, wherein the means are capable of adjusting the ratio according to the following values and intermediate values by linear interpolation between the values given:
1. atmospheric pressure, 550°C, molar ratio H:C > 7.4; or
2. 2 bar pressure absolute, 550°C, molar ratio H:C > 6; or
3. 5 bar pressure absolute, 550°C, molar ratio H:C > 5.3; or
4. atmospheric pressure, 600°C, molar ratio H:C > 9; or
5. 2 bar pressure absolute, 600°C, molar ratio H:C > 8; or
6. 5 bar pressure absolute, 600°C, molar ratio H:C > 7; or
7. atmospheric pressure, 650°C, molar ratio H:C > 15; or
8. 2 bar pressure absolute, 650°C, molar ratio H:C > 10; or
9. 5 bar pressure absolute, 650°C, molar ratio H:C > 7; or
10. atmospheric pressure, 700°C, molar ratio H:C > 24; or
11. 2 bar pressure absolute, 700°C, molar ratio H:C > 14; or
12. 5 bar pressure absolute, 700°C, molar ratio H:C > 8.8.

In order to further improve the heat utilization degree of the fuel cell system, a further preferable embodiment foresees that the method comprises a step of transferring heat from anode exhaust in the anode exhaust conduit to the feed gas mixture using first heat transferring means provided downstream the water-gas shift reactor and/or the methanation unit. More preferably, the first heat transferring means may be provided upstream of the water vapor removal and the carbon dioxide separation unit.

In order to improve the heat utilization, the method further preferably comprises a step of transferring heat from anode exhaust in the anode exhaust conduit to the feed gas mixture using second heat transferring means provided upstream the methanation unit and/or the water-gas shift reactor. This heat transfer from the anode exhaust to the feed gas mixture is preferable in two senses: at first, the methanation reaction and the water-gas shift reaction are both exothermal reactions so that a lower temperature increases the efficiency of these two reactions. At second, the high temperature fuel cells require a high temperature of operation so that the higher temperature of the feed gas mixture facilitates the operation of the fuel cell. Heat transferring means in the sense of the present invention may be a heat exchanger or the like.

According to a further preferable embodiment, the fuel cell system may further comprise a steam circuit and the method comprises a step of producing electric power using water vapor, wherein heat is transferred from the methanation unit to the steam circuit using third heat transferring means and/or wherein heat is transferred from the water-gas shift reactor to the steam circuit using fourth heat transferring means. Thereby the electric power production by the fuel cell system can be further increased. In order to increase the efficiency of the production of electric power via the steam circuit, the steam circuit further preferably comprises at least one turbine.

In order to further prevent from wasting thermal energy and thus, in order to increase the heat utilization degree, in a further preferable embodiment, at least a portion of the heat produced in the methanation reaction and/or in the water-gas-shift reaction may be used for the CO₂-separation, such as for regeneration of amine solution, desorption in a temperature swing adsorption unit, or the like. This might be done e.g. by either extracting heat directly from the reactors, or indirectly by using a share of the steam produced by extracting steam prior to, out of, or downstream of the stream turbine.

Further preferable in view of an excellent heat utilization degree, the share of anode exhaust gas which undergoes methanation and therefore leads to additional methane in the feed gas after adding the treated exhaust gas to the fresh hydrocarbon fuel feed is controlled such that at least 30%, preferably at least 50% and more preferably at least 70% of the heat of the fuel cell reaction is consumed by the reformation reaction and subsequently again released by the methanation reaction in the methanation unit.

In another preferred embodiment, depending on the composition of the hydrocarbon fuel the fuel inlet conduit comprises appropriate gas cleaning means, such as a washer, an adsorber filled with activated carbon or similar, for removal of trace substances like sulfur compounds. These gas cleaning means shall be installed prior to mixing the feed gas with the anode exhaust. By this, the mass flow through the gas cleaning is reduced and thereby the effectiveness of the gas cleaning is increased.

Further details, advantages and characteristics of the present invention will be explained with respect to the following description of the embodiments in light of the enclosed Figures. The Figures show:
Fig. 1 a schematic diagram of a fuel cell system illustrating a method for operating a fuel cell system according to a first embodiment,
Fig. 2 a schematic diagram of a fuel cell system illustrating a method for operating a fuel cell system according to a second embodiment,
Fig. 3 a schematic diagram of a fuel cell system illustrating a method for operating a fuel cell system according to a third embodiment,
Fig. 4 a schematic diagram of a fuel cell system illustrating a method for operating a fuel cell system according to a fourth embodiment,
Fig. 5 a schematic diagram of a fuel cell system illustrating a method for operating a fuel cell system according to a fifth embodiment,
Fig. 6 a schematic diagram of a fuel cell system illustrating a method for operating a fuel cell system according to a sixth embodiment,
Fig. 7 a schematic diagram of a fuel cell system illustrating a method for operating a fuel cell system according to a seventh embodiment,
Fig. 8 a schematic diagram of a fuel cell system illustrating a method for operating a fuel cell system according to a eighth embodiment,
Fig. 9 a schematic diagram of a fuel cell system illustrating a method for operating a fuel cell system according to a ninth embodiment,
Fig. 10 a ternary C-H-O diagram illustrating the temperature dependent borderlines for carbon deposition at an operating pressure of 1 bara,
Fig. 11 a ternary C-H-O diagram illustrating the temperature dependent borderlines for carbon deposition at an operating pressure of 2 bara, and
Fig. 12 a ternary C-H-O diagram illustrating the temperature dependent borderlines for carbon deposition at an operating pressure of 5 bara.

The present invention is described with reference to the following Figures. Herein, all essential elements and components of the fuel cell system to which the inventive method is applied are shown. All other elements and components have been omitted to increase the understanding of the present invention.

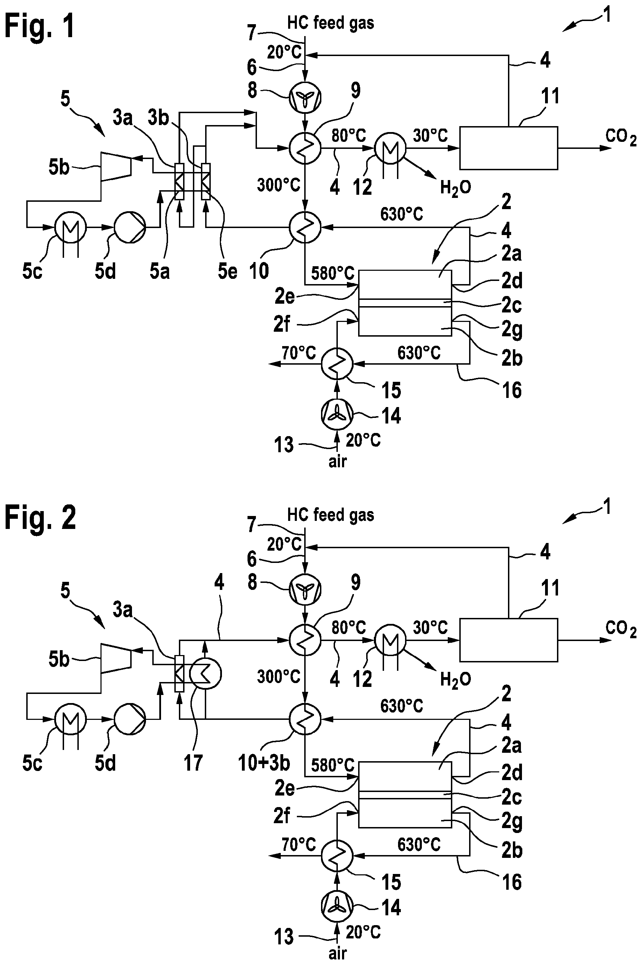

In detail, Fig. 1 shows a fuel cell system 1, which is a potentially reversible fuel cell system operated in a fuel cell mode. The fuel cell system 1 comprises one fuel cell 2 comprising an anode 2a, a cathode 2b and an electrolyte 2c provided between the anode 2a and cathode 2b. The anode 2a is arranged for an internal reformation of hydrocarbon compounds. "Internal reformation" means that the conversion of hydrocarbon compounds, and thus, the reformation reaction of hydrocarbon compounds, is carried out within the fuel cell 2, i.e. in direct thermal contact with the reaction zone of the fuel cell 2.

The fuel cell system 1 further comprises an anode exhaust conduit 4. The anode exhaust conduit 4 connects an anode outlet 2d and a fuel conduit 6. The anode exhaust conduit 4 comprises at least a methanation unit 3a, a water-gas shift reactor 3b, a water removal unit 12 and a carbon dioxide separator 11.

The methanation unit 3a is configured to produce methane from anode exhaust and the water-gas shift reactor 3b is configured to produce hydrogen from anode exhaust. In the present embodiment, the water-gas shift reactor 3b including a fourth heat exchanger 5e is arranged upstream from the methanation unit 3a and therefore, the water-gas shift reactor 3b and the methanation unit 3a are arranged in series. Between the water-gas shift reactor 3b and the methanation unit 3a the anode exhaust conduit 4 is split up, such that by controlling the share of the gas flow through the methanation unit 3a versus the share of gas not passing through the methanation unit 3a in combination with the water removal unit 12 and the carbon dioxide separator 11 the hydrogen to carbon ratio of the anode exhaust can be controlled appropriately to prevent carbon deposition in the fuel cell anode.

The methanation unit 3a and the water gas shift reactor are thermally coupled to a steam cycle 5 and therefore, a third heat exchanger 5a forms part of the methanation unit 3a. The steam cycle 5 comprises a turbine 5b for generating electric power, which is driven by water vapor. Further provided in the steam cycle 5 are a water vapor condenser 5c and a pump 5d.

The fuel conduit 6 connects a fuel cell system inlet 7 with anode inlet 2e. In the fuel conduit 6 a compressor 8 is provided and downstream thereof, a first heat exchanger 9 and a second heat exchanger 10 are provided.

Downstream of the methanation unit 3a, in the anode exhaust conduit 4, a water vapor condenser or water separator 12 is arranged upstream the carbon dioxide separation unit 11 to separate water from the anode exhaust.

When operating the fuel cell system 1 according to an embodiment of the inventive method, feed gas comprising hydrocarbon compounds is fed to the fuel conduit 6 via fuel cell system inlet 7. The feed gas may be any hydrocarbon compound, like e.g. natural gas, propane gas, biogas, domestic gas, gasified diesel, benzene and the like. Most preferably, the hydrocarbon feed gas includes methane, here as an example 1 mol per second of methane may be supplied to the fuel conduit 6 via fuel cell system inlet 7.

The methanation unit 3a is controlled to produce methane out of the anode exhaust and the water gas shift reactor 3b is controlled to produce hydrogen out of the anode exhaust so that in a feed gas mixture, which comprises the hydrocarbon feed gas fed via the fuel cell system inlet and recycled/treated anode exhaust, which is supplied to the anode inlet 2e, a molar ratio of hydrogen to carbon at the selected operation temperature of the fuel cell 2 prevents the formation of solid carbon, wherein the molar ratio of oxygen to carbon in the feed gas mixture supplied to the anode inlet is much smaller than 1, preferably less than 0.1. This prevents the formation of solid carbon within the fuel cell system 1, which would cause side-reactions and might lead to carbon corrosion of the fuel cell, which destroys the performance of the fuel cell 2 and decreases the efficiency degree thereof.

In order to further prevent the formation of solid carbon, carbon dioxide is separated from an anode exhaust in the carbon dioxide separation unit 11, thereby, great efficiency of the overall fuel cell system can be provided. This degree of efficiency is further improved as water is not added to the feed gas or the feed gas mixture supplied to the anode inlet 2e and water vapor contained in the anode exhaust is reduced or removed therefrom in water vapor condenser or water removal unit 12. Therefore, the electrochemical performance of the fuel cell is improved. Small amounts of water and/or carbon dioxide of preferably less than 3 Vol%, relative to the total volume of the feed gas mixture supplied to the anode inlet 2e may be contained in the feed gas mixture but none of carbon dioxide and water is added at a specific point to the fuel conduit 6.

In the fuel conduit 6, the hydrocarbon compound (or mixtures thereof) is mixed with anode exhaust, which has undergone a methanation reaction and a water-gas shift reaction. In addition, water has been condensed from said anode exhaust and carbon dioxide has been separated therefrom in the carbon dioxide separation unit.

As an example, anode exhaust to be fed to the fuel conduit 6 may contain 5 mol per second hydrogen relative to 0.25 mol methane per second. 1 mol per second methane may be fed via fuel cell system inlet 7 to fuel conduit 6 and the gases are mixed in the fuel conduit 6. The resulting feed gas mixture is then compressed in compressor 8 and reaches the first heat exchanger 9. Heat exchanger 9 transfers heat from the anode exhaust gas after the methanation unit 3a and the water-gas shift reactor 3b to the feed gas mixture, so that the mixture is pre-heated for a first time and the temperature is increased from about room temperature (20 °C) to e.g. 300 °C.

The feed gas mixture then enters the second heat exchanger 10. Here, heat is transferred from anode exhaust to the feed gas mixture so that at the anode inlet 2e, the temperature of the feed gas mixture is e.g. about 580 °C.

Such high temperature promotes the reformation reaction of the mainly methane containing hydrocarbon compound contained in the feed gas mixture of this embodiment. The reformation reaction is carried out inside the anode as an internal reformation reaction of the fuel cell 2 and proceeds parallel to the fuel cell reaction so that heat released during the fuel cell reaction is consumed effectively by the reformation reaction. Since initially there is no or only few water steam and carbon dioxide present at the anode inlet, only water and carbon dioxide produced during the fuel cell reaction are provided for the internal reforming. Thereby, the effective reforming zone is stretched out further along the cell compared to state-of-the-art systems. This leads to reduced thermal gradients/stress and therefore longer lifetime of the fuel cells. Furthermore, the efficiency is greatly increased, since there are much fewer product molecules diluting the fuel stream along the cell because they are consumed to a large extend by the reforming reactions.

Anode exhaust leaves the anode outlet 2d at a high temperature of about e.g. 630 °C, this heat being used to further pre-heat the mixture to be supplied to the anode inlet 2e in the second heat exchanger 10. The then partly cooled anode exhaust enters the water-gas shift reactor 3b and hydrogen is produced in an exothermic reaction before the stream leaving the water-gas shift reactor 3b is partly supplied to the methanation unit 3a and methane is generated by the exothermic methanation reaction. Since the anode exhaust entering the water-gas shift reactor 3b and the methanation unit 3a is at lower temperature, the water-gas shift reaction and the methanation reaction, which are both exothermic, are further promoted. The share of gas passing through the methanation unit 3a is well controlled, for example by one or more valves in the anode exhaust conduit arranged downstream of both reactors prior to re-mixing the streams (not shown in the figure). Thereby, by adjusting the share of anode exhaust passing through the methanation unit 3a to 20% of the total anode exhaust gas volume flow, the gas composition of the anode exhaust to be fed to the fuel conduit 6 is controlled to contain e.g. 5 mol per second hydrogen relative to 0.25 mol methane per second after removal of water and carbon dioxide.

The methanation reaction and also the water-gas shift reaction both produce heat as a side-effect of these exothermic reactions and the heat is preferably transferred to the steam cycle 5. The heat can be used to produce water vapor from water and the water vapor can drive the turbine 5b so that extra electric power can be produced and the reaction heat is more effectively used.

Heat exchanger 9 transfers heat from the anode exhaust gas after the methanation unit 3a and the water-gas shift reactor 3b to the feed gas mixture, so that the mixture is pre-heated for a first time and the temperature is increased from about room temperature (20 °C) to e.g. 300 °C. The temperature of the anode exhaust after having passed the methanation unit 3a and the water-gas shift reactor 3b may then drop to e.g. 80 °C and water vapor is condensed and separated in water vapor condenser or water separator 12. This leads to a further decrease of the temperature of the anode exhaust, from which further downstream, carbon dioxide is separated in carbon dioxide separation unit 11 and the resultant treated anode exhaust is then again mixed with hydrocarbon compound (mainly methane in the present embodiment) entering the fuel conduit 6 via fuel cell system inlet 7.

For the sake of completeness, it is outlined that the cathode 2b comprises a cathode inlet 2f and a cathode outlet 2g. Oxidant gas, like e.g. pure oxygen or air is supplied to the cathode inlet 2f via oxidant conduit 13. In the oxidant conduit 13 a compressor 14 is arranged as well as a heat exchanger 15. The heat exchanger uses heat from the cathode exhaust supplied via a cathode exhaust conduit 16 to pre-heat the oxidant in the oxidant conduit 13, so that thermal energy at the cathode side of the fuel cell 2 is effectively used.

The fuel cell system 1 is highly efficient. Depending on the operating conditions, such as temperature, pressure, operating voltage, etc., the fuel cell electrical efficiency may be about 80%, which means that 80% of the heating value of the hydrocarbon fuel fed through inlet 7 is obtained as electric energy in the fuel cell 2. Additionally, around 7% electric power can be produced by the steam cycle 5. On the other hand, the auxiliary consumption, mainly originating from the carbon dioxide separation, may require about 5 to 7% electric power, such that overall the system will typically have an electrical efficiency of around or above 80% of the hydrocarbon feed gas lower heating value.

Fig. 2 is a schematic diagram of a fuel cell system 1 illustrating a method for operating a fuel cell system, which is a potentially reversible fuel cell system operated in a fuel cell mode, according to a second embodiment. The main difference to the first embodiment is that the second heat exchanger 10 and the water-gas shift reactor 3b are combined. Thereby, the efficiency of the heat exchanger can be increased greatly since heat can be transferred more effectively, i.e. the heat from the anode exhaust and the heat from the exothermal water-gas shift reaction. This may be realized by filling or coating the heat exchanger 10 on the hot side (anode exhaust side) with water-gas shift catalyst. Accordingly, another heat exchanger 17 is arranged parallel to the methanation unit 3a also connected to the steam cycle, so that heat from the gas not fed to the exothermal methanation reaction can be effectively used for the production of steam to be used in the steam cycle 5.

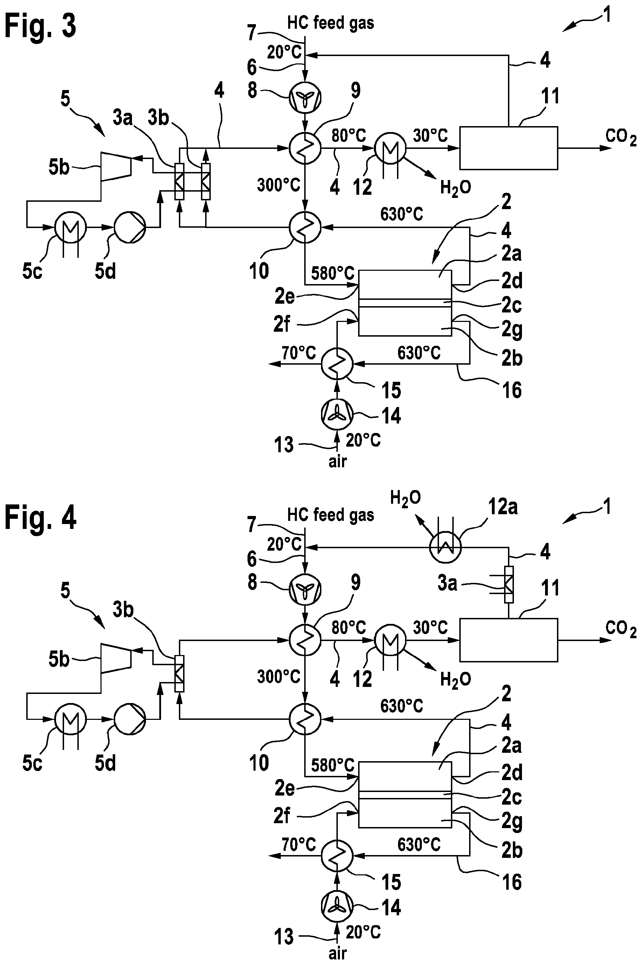

Fig. 3 is a schematic diagram of a fuel cell system 1 illustrating a method for operating a fuel cell system, which is a potentially reversible fuel cell system operated in a fuel cell mode, according to a third embodiment. The main difference to the first embodiment is that the methanation unit 3a and the water-gas shift reactor 3b are arranged in parallel so that anode exhaust passes through the water-gas shift reactor 3b and the methanation unit 3a at the same time. However, the anode exhaust is divided up into two separate streams, one being fed to the methanation unit 3a and another one being fed to the water-gas shift reactor 3a. The division into the two streams can e.g. be controlled by valves arranged upstream or downstream of the reactors. Thereby, control of the production of hydrogen relative to the production of methane is facilitated.

Fig. 4 is a schematic diagram of a fuel cell system 1 illustrating a method for operating a fuel cell system, which is a potentially reversible fuel cell system operated in a fuel cell mode, according to a fourth embodiment. The main difference to the first embodiment is that the water-gas shift reactor 3b is coupled to the steam cycle 5 and the methanation unit 3a is arranged downstream of the carbon dioxide separator 11 in the anode exhaust conduit 4. Although it is not explicitly shown in the figure, the methanation unit may also be connected to the steam cycle, such that heat from the exothermal reaction might be more efficiently used. Further, a secondary water removal unit 12a (e.g. condenser) might be arranged after the methanation unit 3a and before mixing the methanation exhaust with the fresh feed gas. Since the carbon dioxide separation unit 11 separates carbon dioxide from the anode exhaust and also the methanation reaction consumes carbon dioxide remained in the anode exhaust after having passed the carbon dioxide separation unit 11, the removal of carbon dioxide from the anode exhaust is greatly improved so that carbon formation is prevented to a greater extent. In this configuration the carbon dioxide separation unit 11 does not have to provide a high separation efficiency, since the residual carbon dioxide is removed subsequently by the methanation. Therefore, electricity and/or thermal self-consumption by the carbon dioxide separation unit 11 can be reduced, which increases the total efficiency of the fuel cell system.

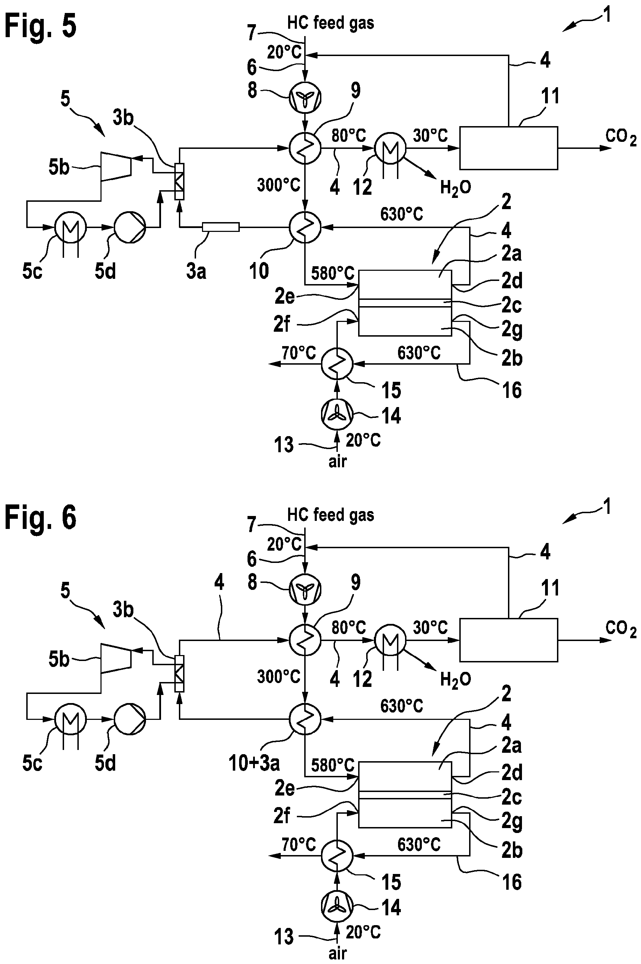

Fig. 5 is a schematic diagram of a fuel cell system 1 illustrating a method for operating a fuel cell system, which is a potentially reversible fuel cell system operated in a fuel cell mode, according to a fifth embodiment. The main difference to the first embodiment is that only the water-gas shift reactor 3b is coupled to the steam cycle 5 and the methanation unit 3a is arranged upstream of the water-gas shift reactor 3b, wherein the methanation reaction is carried out adiabatically and no heat exchanger is coupled to the methanation unit 3a. Therefore, due to the high temperature at the methanation outlet due to the adiabatic reactor design the methanation only occurs partially and there is ideally no need for splitting the gas flows to achieve the required gas composition. However, this simplification of the system requires controlling the composition of the recycled anode exhaust gas by a more complex interaction of adjusting the hydrocarbon feed gas amount and the fuel cell operating conditions (temperature, pressure, current/voltage).

Fig. 6 is a schematic diagram of a fuel cell system 1 illustrating a method for operating a fuel cell system, which is a potentially reversible fuel cell system operated in a fuel cell mode, according to a sixth embodiment. The main difference to the second embodiment is that the methanation unit 3a is integrated into the hot side of the second heat exchanger 10 and only the water-gas shift reactor 3b is arranged downstream and coupled to the steam cycle 5. The integration of the methanation unit 3a into the second heat exchanger 10 improves the efficiency of the heat exchanger and more heat can be transferred to the feed gas mixture. Analogously to Fig. 5 this system layout requires more complex controls to adjust the hydrogen to carbon ratio.

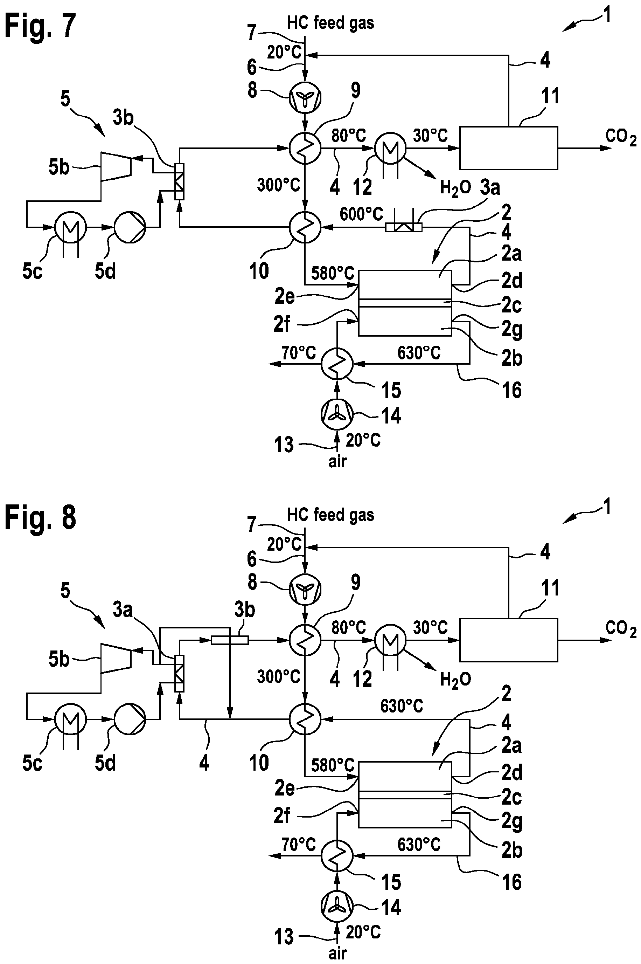

Fig. 7 is a schematic diagram of a fuel cell system 1 illustrating a method for operating a fuel cell system, which is a potentially reversible fuel cell system operated in a fuel cell mode, according to a seventh embodiment. The main difference to the first embodiment is that only the water-gas shift reactor 3b is coupled to the evaporator of the steam cycle 5 and the methanation unit 3a is arranged upstream of the second heat exchanger 10. In this embodiment, although not shown in the figure, the methanation reactor might be slightly cooled by superheating the steam generated in the steam cycle before it enters the steam turbine. Accordingly, heat can be extracted at a higher temperature level in the steam cycle 5 so that the steam turbine can operate with improved efficiency. Accordingly, superheated steam can be produced easily to improve the electric power output of the steam cycle 5.

Fig. 8 is a schematic diagram of a fuel cell system 1 illustrating a method for operating a fuel cell system, which is a potentially reversible fuel cell system operated in a fuel cell mode, according to an eighth embodiment. The main difference to the first embodiment is that the methanation unit 3a and the water-gas shift reactor 3b are arranged in series. Only the methanation unit 3a is thermally connected to the steam cycle. The water-gas shift reactor 3b is not cooled. A part of the steam produced by heat of the methanation reaction is supplied to the gas entering the methanation unit, such that in a very controlled manner the share of gas converted in the methanation reaction can be controlled as desired by adjusting the thermodynamic equilibrium. At the same time the efficiency of the water gas shift reaction is increased due to the additional steam available in the gas.

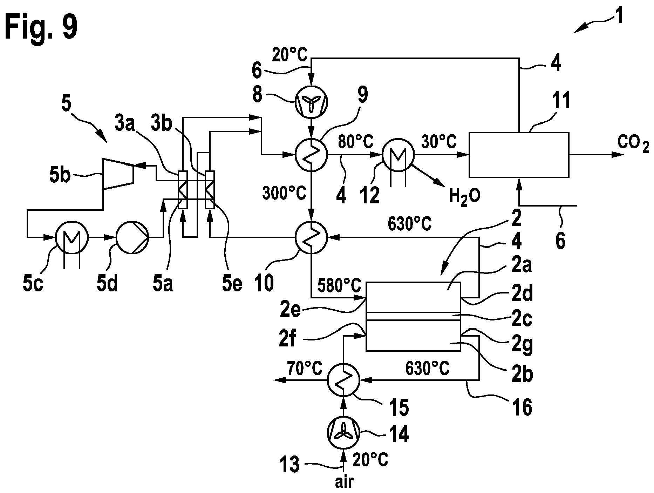

Fig. 9 is a schematic diagram of a fuel cell system 1 illustrating a method for operating a fuel cell system, which is a potentially reversible fuel cell system operated in a fuel cell mode, according to a ninth embodiment. This system is suitable for the use of biogas. The main difference to the first embodiment is that due to the high amounts of carbon dioxide in the biogas, the feed gas (biogas) is supplied via fuel conduit 6 directly to the carbon dioxide separator 11, which is located in the fuel conduit 6. Alternatively, both gas streams can be mixed before entering the CO₂ separator 11. Therefore, solid carbon formation due to a high share of CO₂ in the anode inlet can be prevented.

In all embodiments, electric power is produced in great amounts. Furthermore, heat utilization is increased so that the total efficiency of the fuel cell system operated according to any of the embodiments is exceptionally high.

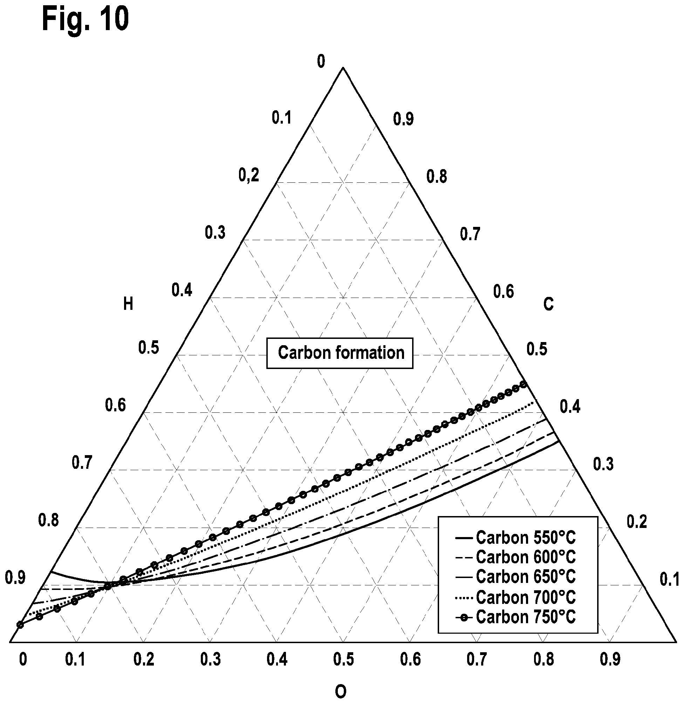

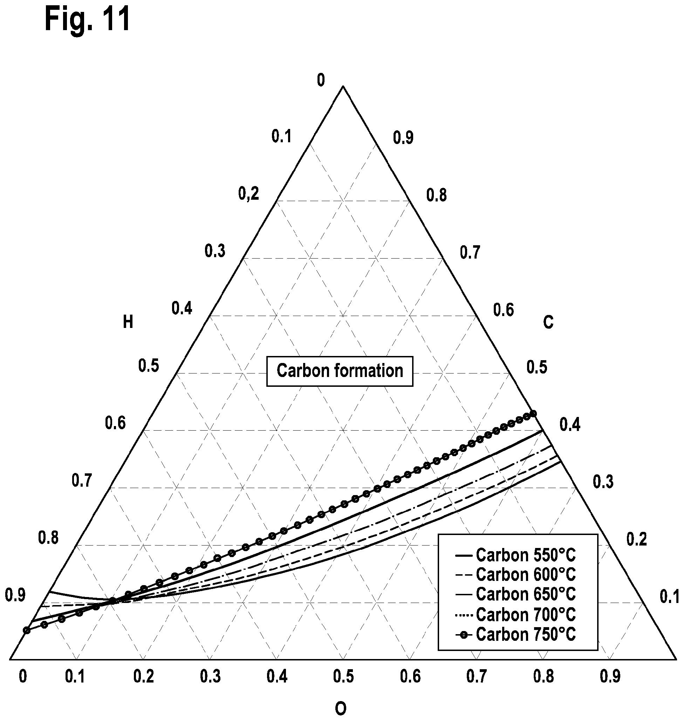

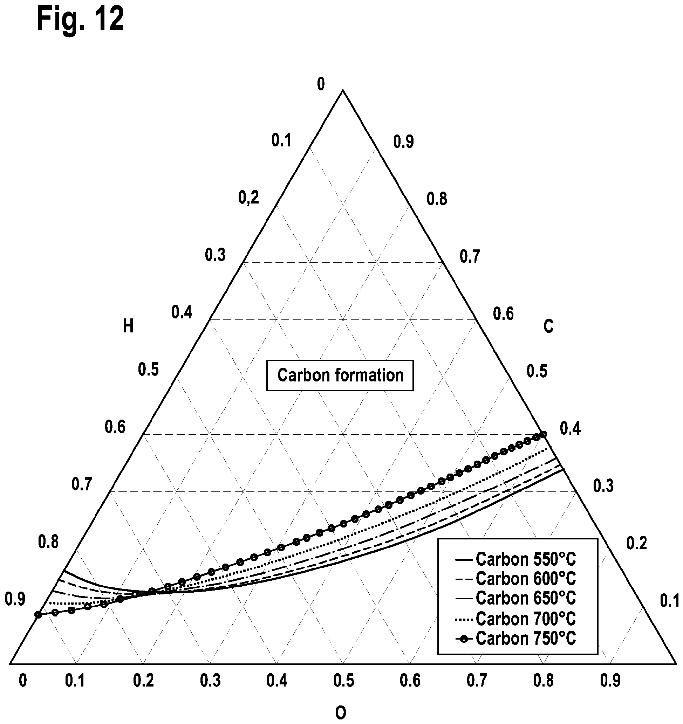

Figs. 10 to 12 show ternary C-H-O diagrams illustrating the temperature dependent borderlines for carbon deposition (solid carbon) at an operating pressure of 1 bara, 2 bara and 5 bara at different operating temperatures of the fuel cell system. Therefrom, the ideal fuel cell operation conditions for the prevention of deposition of solid carbon can be determined.

While embodiments of the invention have been illustrated and described, it is not intended that these embodiments illustrate and describe all possible form of the invention. The words used in the specification are words of description rather than limitation, and it is understood that various changes may be made without departing from the spirit and the scope of the invention.

### Reference signs

- 1: fuel cell system
- 2: fuel cell
- 2a: anode
- 2b: cathode
- 2c: electrolyte
- 2d: anode outlet
- 2e: anode inlet
- 2f: cathode inlet
- 2g: cathode outlet
- 3a: methanation unit
- 3b: water-gas shift reactor
- 4: anode exhaust conduit
- 5: steam cycle
- 5a: third heat exchanger
- 5b: turbine
- 5c: water vapor condenser
- 5d: pump
- 5e: fourth heat exchanger
- 6: fuel conduit
- 7: fuel cell system inlet
- 8: compressor
- 9: first heat exchanger
- 10: second heat exchanger
- 11: carbon dioxide separator
- 12: water vapor condenser or water separator
- 12a: secondary water removal unit
- 13: oxidant conduit
- 14: compressor
- 15: heat exchanger
- 16: cathode exhaust conduit
- 17: heat exchanger

## Claims

1. Method of operating a fuel cell system (1) in fuel cell mode, comprising:
- at least one fuel cell (2) comprising an anode (2a), a cathode (2b) and an electrolyte (2c) provided between the anode (2a) and the cathode (2b), the fuel cell (2) being arranged for an internal reformation of hydrocarbon compounds inside the anode (2a),
- an anode exhaust conduit (4) connecting the anode outlet (2d) and a fuel conduit (6) and comprising a methanation unit (3a), a water-gas shift reactor (3b), and a water vapor condenser or water removal unit (12),
- the anode exhaust conduit (4) or the fuel conduit (6) comprising a carbon dioxide separation unit (11), and
- the fuel conduit (6) connecting a fuel cell system inlet (7) and an anode inlet (2e),
the method comprising the steps of:
a) feeding feed gas into the fuel conduit (6) via the fuel cell system inlet (7), the feed gas comprising hydrocarbon compounds;
b) controlling the methanation unit (3a) to produce methane and controlling the water gas shift reactor (3b) to produce hydrogen so that in a feed gas mixture supplied to the anode inlet (2e) a molar ratio of hydrogen to carbon at a selected operation temperature of the fuel cell (2) prevents the formation of solid carbon, wherein the molar ratio of oxygen to carbon in the feed gas mixture supplied to the anode inlet is smaller than 1, preferably smaller than 0.1,
c) wherein carbon dioxide is separated from an anode exhaust or the feed gas mixture in the carbon dioxide separation unit (11),
wherein water is not added to the feed gas or the feed gas mixture supplied to the anode inlet (2e), and
wherein water vapor contained in the anode exhaust is separated in the water vapor condenser or water removal unit (12).

2. The method of claim 1, comprising a step of reforming hydrocarbon compounds contained in the feed gas mixture inside the anode.

3. The method of claim 1 or 2, wherein when the total amount of methane produced by methanation reaction in the methanation unit (3a) and hydrogen produced by water-gas shift reaction in the water-gas shift reactor (3b) is 100 Mol%, the water-gas shift reaction produces 65 to 95 Mol% hydrogen and the methanation reaction produces methane in an amount of 100 Mol% minus the amount of hydrogen produced in Mol%.

4. The method of any one of the preceding claims, further comprising controlling the molar ratio of hydrogen to carbon atoms in the feed gas mixture fed to the anode of the fuel cell depending to the fuel cell operating temperature and pressure by adjusting reactor temperatures and/or the share of anode exhaust gas fed to the methanation unit (3a), such that carbon deposition is thermodynamically prevented without the presence of water steam in the feed gas mixture, especially without adding water to the feed gas mixture supplied to the fuel cell, wherein the means are capable of adjusting the ratio according to the following values and intermediate values by linear interpolation between the values given:
- atmospheric pressure, 550°C, molar ratio H:C > 7.4; or
- 2 bar pressure absolute, 550°C, molar ratio H:C > 6; or
- 5 bar pressure absolute, 550°C, molar ratio H:C > 5.3; or
- atmospheric pressure, 600°C, molar ratio H:C > 9; or
- 2 bar pressure absolute, 600°C, molar ratio H:C > 8; or
- 5 bar pressure absolute, 600°C, molar ratio H:C > 7; or
- atmospheric pressure, 650°C, molar ratio H:C > 15; or
- 2 bar pressure absolute, 650°C, molar ratio H:C > 10; or
- 5 bar pressure absolute, 650°C, molar ratio H:C > 7; or
- atmospheric pressure, 700°C, molar ratio H:C > 24; or
- 2 bar pressure absolute, 700°C, molar ratio H:C > 14; or
- 5 bar pressure absolute, 700°C, molar ratio H:C > 8.8.

5. The method of any one of the preceding claims, comprising a step of transferring heat from anode exhaust in the anode exhaust conduit (4) to the feed gas mixture using first heat transferring means (9) provided downstream the water-gas shift reactor (3a) and/or the methanation unit (3b).

6. The method of any one of the preceding claims, comprising a step of transferring heat from anode exhaust in the anode exhaust conduit (4) to the feed gas mixture using second heat transferring means (10) provided upstream the methanation unit (3a) and the water-gas shift reactor (3b).

7. The method of any one of the preceding claims, wherein the fuel cell system (1) further comprises a steam circuit (5) and the method comprises a step of producing electric power using water vapor, wherein heat is transferred from the methanation unit (3a) to the steam circuit (5) using third heat transferring means (5a) and/or wherein heat is transferred from the water-gas shift reactor (3a) to the steam circuit (5) using fourth heat transferring means (5e).

8. The method of any one of the preceding claims, wherein at least a portion of the heat produced in the methanation reaction and/or in the water-gas-shift reaction is used for the CO₂-separation, such as for regeneration of amine solution, desorption in a temperature swing adsorption unit, or the like.

9. The method of any one of the preceding claims, wherein the total content of water vapor contained in the feed gas mixture supplied to the anode inlet (2e) is controlled to be less than 20 Vol%, preferably less than 10 Vol% and more preferably less than 3 Vol%, relative to the total volume of the feed gas mixture.

10. The method of any one of the preceding claims, wherein the total content of carbon dioxide contained in the feed gas mixture supplied to the anode inlet (2e) is less than 20 Vol%, preferably less than 10 Vol% and more preferably less than 3 Vol%, relative to the total volume of the feed gas mixture.

11. The method of any one of the preceding claims, wherein the share of anode exhaust gas which undergoes methanation and therefore leads to additional methane in the feed gas after adding the treated exhaust gas to the fresh hydrocarbon fuel feed is controlled such that at least 30%, preferably at least 50% and more preferably at least 70% of the heat of the fuel cell reaction is consumed by the reformation reaction and subsequently again released by the methanation reaction in the methanation unit (3a).
